# FASCICULE DE BREVET EUROPEEN

(11) **EP 1 955 930 B1**
(45) Date de publication et mention de la délivrance du brevet: **26.05.2010**
(21) Numéro de dépôt: 07305010.6
(22) Date de dépôt: 28.12.2007
(51) Int. Cl.: B62D 21/15, B60R 21/34

(54) **Structure avant de véhicule automobile**
Unterbau eines Kraftfahrzeugs
Front structure of an automobile.

(30) Priorité: 08.02.2007 FR 0753144
(43) Date de publication de la demande: 13.08.2008
(73) Titulaire: PEUGEOT CITROËN AUTOMOBILES S.A., 78140 Vélizy Villacoublay (FR)
(72) Inventeur: Gauthier, Jean-Pierre, 94800, VILLEJUIF (FR)

(56) Documents cités:
- EP-A- 1 683 709
- FR-A- 2 800 695
- FR-A- 2 887 211
- DYCKHOFF J ET AL: "Faserverbundkunststoff-Träger mit Crashfunktion" ATZ AUTOMOBILTECHNISCHE ZEITSCHRIFT, vol. 101, no. 7/8, juillet 1999 (1999-07), pages 574-580, XP000832772 vieweg publishing, wiesbaden, de

## Description

La présente invention concerne une structure avant d'un véhicule automobile et plus particulièrement la zone inférieure de cette structure avant, couramment appelée "voie basse avant".

Dans le cadre de la sécurité passive qui concerne l'ensemble des moyens et des actions mises en oeuvre pour diminuer les conséquences d'un accident, les constructeurs automobiles doivent faire face à trois préoccupations majeures.

La première préoccupation consiste à assurer la protection des occupants du véhicule, notamment lors d'un choc frontal.

La deuxième préoccupation consiste à maîtriser les coûts de réparation du véhicule lors d'un choc dit "urbain", c'est à dire à faible vitesse.

Enfin, la troisième préoccupation des constructeurs consiste à limiter l'agressivité du véhicule vis à vis des autres usagers de la route et notamment les piétons afin de réduire les risques de blessures graves au niveau des jambes.

La conception d'un véhicule automobile doit donc aujourd'hui répondre à de nombreuses réglementations et doit donc subir des procédures d'essai, entre autres, pour le choc piéton et le choc à faible vitesse au niveau de la réparabilité.

Pour cela, l'avant d'un véhicule automobile et notamment la"voie basse avant" comporte une structure avant qui comprend un berceau supportant la suspension avant du véhicule et une poutre de pare-chocs transversale reliée à chacune de ses extrémités au berceau par une prolonge s'étendant vers l'avant du véhicule et de direction générale sensiblement horizontale.

Il est aussi connue l'utilisation d'un matériau composite dans la fabrication d'un absorbeur de chocs disposé entre la poutre de pare-chocs transversale et la prolonge, comme cela est par exemple détaillé dans l'article intitulé « Faserverbundkunststoff-Träger mit Crashfunktion » de Von Johannes Dyckhoff et Hans-Günther Haldenwanger (ATZ, Automobiltechnische Zeitschrift 101 (1999) 7/8), afin d'optimiser la déformation de l'absorbeur pour l'absorption et la dissipation des efforts d'un choc. Le document divulgue toutes les caractéristiques du préambule de la revendication 1.

Ces prolonges de berceau jouent le rôle de poutre d'absorption de chocs et participent à la prestation choc piéton ainsi qu'à la prestation choc urbain en tant qu'élément destiné à transmettre les efforts du choc.

Jusqu'à présent, les prolonges de berceau sont formées chacune par un corps longitudinal creux en acier, en aluminium ou en matériau composite relié à ses extrémités respectivement au berceau et à la poutre transversale. En cas de choc et en particulier de choc frontal, chaque prolonge participe à l'amortissement du choc et concourt notamment par ses déformations, à l'absorption et à la dissipation de l'énergie engendrée par le choc, comme cela est décrit dans le document FR-A-2800695.

Les prolonges en acier ont pour inconvénient d'avoir une masse importante ce qui augmente le poids général du véhicule automobile.

De plus, le montage de ce type de prolonges nécessite un nombre de pièces et d'opérations importantes pour les relier respectivement au berceau et à la poutre transversale, le plus souvent par plusieurs organes de vissage.

L'invention a pour but d'améliorer les structures d'avant connues. Ce but est réalisé par la structure d'avant selon la revendication 1.

Selon d'autres caractéristiques de l'invention :
- le matériau composite est un mélange de polypropylène et de fibres de verre,
- les moyens de liaison de la prolonge sur la poutre transversale comprennent au moins un élément d'emboîtement par glissement de l'extrémité avant de la prolonge sur l'extrémité correspondante de la poutre transversale et un organe de liaison par vissage desdites extrémités entre elles,
- ledit au moins élément d'emboîtement par glissement comprend deux glissières opposées, ménagées sur les bords inférieur et supérieur d'une platine transversale ayant sensiblement la forme d'un quadrilatère et venue de matière avec le corps de la prolonge,
- les moyens de liaison de la prolonge sur le berceau comprennent un doigt d'indexage ménagé sur l'extrémité arrière de la prolonge et destiné à coopérer avec un logement de forme complémentaire ménagé sur ledit berceau, et
- le doigt d'indexage est recouvert d'un embout de caoutchouc.

L'invention sera mieux comprise à la lecture de la description qui va suivre, donnée à titre d'exemple et faite en se référant aux dessins annexés, sur lesquels :
- la Fig. 1 est une vue schématique en perspective de la zone inférieure d'une structure avant conforme à l'invention,
- la Fig. 2 est une vue schématique en perspective d'une prolonge de la structure avant conforme à l'invention,
- la Fig. 3 est une vue schématique en perspective des moyens de liaison de l'extrémité avant de la prolonge sur une poutre de pare-chocs,
- la Fig. 4 est une vue schématique en perspective de l'extrémité avant de la prolonge montée sur la poutre de pare-chocs, et
- la Fig. 5 est une vue schématique en perspective de l'extrémité arrière de la prolonge montée sur un berceau.

Dans ce qui suit, les orientations utilisées sont les orientations habituelles d'un véhicule automobile et les termes "avant" et "arrière" s'entendent par rapport au sens de marche normal du véhicule.

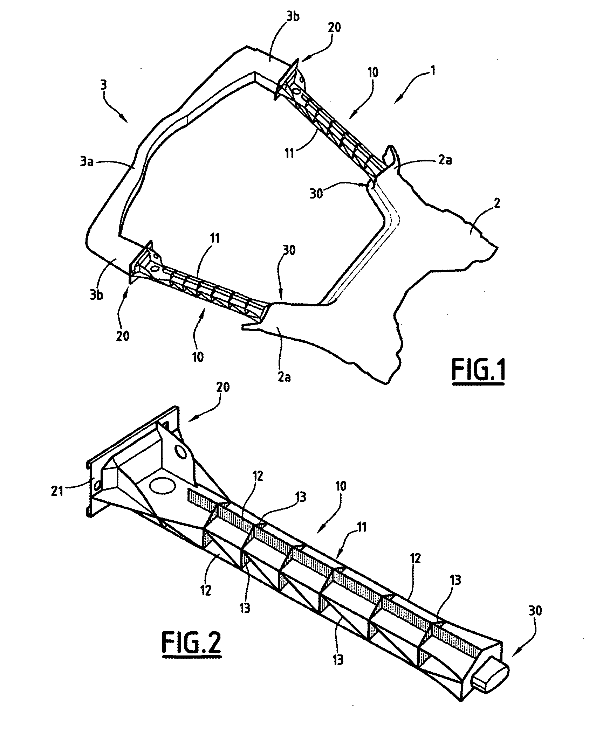

Sur la Fig. 1, on a représenté schématiquement une partie d'une structure avant d'un véhicule automobile et plus particulièrement la zone inférieure de cette structure avant, couramment appelée "voie basse avant".

Comme montré sur cette figure, cette structure avant désignée dans son ensemble par la référence 1, comprend notamment un berceau 2 comportant généralement une plateforme munie d'attaches, non représentées, destinées à supporter la suspension avant du véhicule, elle même liée par ailleurs au train avant de ce véhicule.

Le berceau 2 comporte sur chacun de ses bords latéraux, deux prolongements 2a dirigés vers l'avant du véhicule.

La structure avant 1 comprend également une poutre transversale 3 de pare-chocs s'étendant transversalement par rapport à l'axe longitudinal du véhicule.

Cette poutre transversale 3 est formée par une partie centrale 3a munie à chacune de ses extrémités d'un absorbeur de chocs 3b s'étendant vers l'arrière du véhicule.

Ainsi que représenté à la Fig. 1, chaque prolongement 2a du berceau 2 est relié à un absorbeur de chocs 3b de la poutre transversale 3 par une prolonge désignée par la référence générale 10 de direction générale sensiblement horizontale.

En se reportant maintenant aux Figs. 2 à 5, on va décrire une prolonge 10, l'autre prolonge étant identique.

La prolonge 10 est formée par une pièce allongée, réalisée en matériau composite, comme par exemple un mélange de polypropylène et de fibres de verre.

La prolonge 10 est obtenue par injection ou par moulage et elle comporte, à son extrémité avant, des moyens 20 de liaison avec un absorbeur de chocs 3b de la poutre transversale 3 et, à son extrémité arrière, des moyens 30 de liaison avec un prolongement 2a du berceau 2.

La pièce allongée de la prolonge 10 comprend un corps principal 11 formé par une succession de nervures longitudinales 12 et transversales 13 dont la répartition et la forme sont déterminées pour permettre à cette prolonge 10 de transmettre l'effort d'un choc piéton ou d'un choc urbain dit à réparabilité de la poutre transversale 3 au berceau 2, et pour permettre à cette prolonge 10 d'absorber un maximum d'énergie en cas de choc frontal, évitant par la même la déformation de l'habitacle ce qui garantit la sécurité des passagers

Pour autant, elle ne doit pas présenter une trop grande rigidité notamment lors d'un choc de faible intensité, qui peut correspondre à une collision avec un piéton.

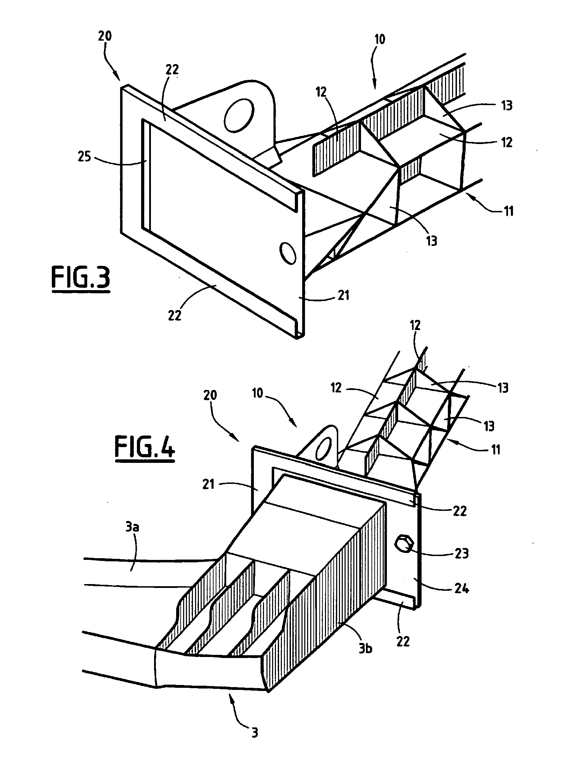

Ainsi que montré sur les Figs. 3 et 4, les moyens 20 de liaison de la prolonge 10 sur l'absorbeur de chocs 3b correspondant de la poutre transversale 3 comprennent une platine transversale 21 ayant sensiblement la forme d'un quadrilatère, comme par exemple un rectangle et venue de matière avec le corps 11 de la prolonge 10.

Les moyens 20 de liaison comprennent également au moins un élément 22 d'emboîtement par glissement de l'extrémité avant de la prolonge 10 sur l'extrémité correspondante de l'absorbeur de chocs 3b de la poutre transversale 3 et, dans l'exemple de réalisation représenté à la Fig. 3, ledit au moins élément d'emboîtement par glissement est formé de deux glissières 22 opposées et ménagées sur les bords inférieur et supérieur de la platine transversale 21.

Les moyens 20 de liaison comprennent de plus une butée 25 au déplacement par glissement de l'extrémité avant de la prolonge 10 sur l'extrémité correspondante de l'absorbeur 3b. Ladite butée 25 est disposée au niveau d'un bord d'extrémité latérale d'au moins une glissière 22, et s'étend de préférence verticalement le long de la platine 21, de sorte qu'elle relie des extrémités latérales des glissières 22 supérieure et inférieure.

Les moyens 20 de liaison comprennent aussi un organe de fixation 23 (Fig. 4) par vissage de l'extrémité 3b de la poutre transversale 3 sur l'extrémité avant de la prolonge 10. L'extrémité 3b de la poutre transversale 3 est pourvue comme montré à la Fig. 4, d'une plaque transversale 24 dont les bords, respectivement inférieur et supérieur, sont destinés à pénétrer chacun dans une glissière 22 de la platine 21.

Ainsi, le montage de la prolonge 10 sur l'extrémité de l'absorbeur de chocs 3b correspondant s'effectue par coulissement transversal de la prolonge 10 en faisant pénétrer les bords, respectivement inférieur et supérieur de la plaque 24 dans les glissières 22 de la platine 21 de ladite prolonge 10 jusqu'à ce que la plaque 24 vienne en appui contre la butée 25. Ensuite, la fixation de la prolonge 10 sur l'absorbeur de chocs 3b de la poutre transversale 3 est obtenue par l'organe de vissage 23.

Les moyens de liaison 20 permettent de réduire le nombre d'organes de vissage ainsi que le nombre d'écrous et d'inserts et surtout de réduire le temps de montage par rapport aux prolonges réalisées jusqu'à présent en acier ou en aluminium.

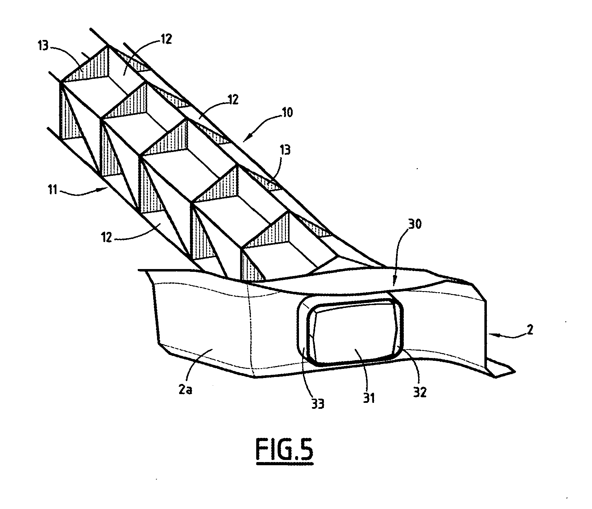

Comme montré à la Fig. 5, les moyens 30 de liaison de l'extrémité arrière de la prolonge 10 sur le prolongement 2a correspondant du berceau 2 comprennent un doigt d'indexage 31 ménagé sur l'extrémité arrière de ladite prolonge 10. Ce doigt d'indexage 31 est destiné à pénétrer dans un logement 32 de forme complémentaire ménagé sur le prolongement 2a du berceau 2. Le logement 32 est réalisé par exemple par emboutissage et comporte un bord tombé 33. De préférence, le doigt d'indexage 31 est recouvert d'un embout de caoutchouc.

Ainsi, le montage de chaque prolonge 10 entre le berceau 2 et la poutre transversale 3 de la structure avant conforme à l'invention est particulièrement simple à mettre en oeuvre et nécessite un nombre de pièces de fixation réduit.

De plus, grâce à l'utilisation d'un matériau composite pour réaliser les prolonges 10, la masse de ces prolonges 10 est réduite permettant ainsi de réduire le poids du véhicule automobile.

Enfin, les différentes nervures pratiquées sur chaque prolonge apportent la rigidité nécessaire au transfert de l'effort dans le cas d'un choc dit de réparabilité.

## Revendications

1. Structure avant d'un véhicule automobile, du type comprenant notamment un berceau (2) et une poutre transversale (3) de pare-chocs reliée à chacune de ses extrémités (3b) au berceau (2) par une prolonge (10), chaque prolonge (10) étant formée par une pièce allongée réalisée en matériau composite et comportant à ses extrémités avant et arrière des moyens (20, 30) de liaison respectivement avec la poutre transversale (3) et le berceau (2), **caractérisée en ce que** la pièce allongée de chaque prolonge (10) comprend un corps principal (11) formé par une succession de nervures longitudinales (12) et transversales (13).

2. Structure avant selon la revendication 1, **caractérisée en ce que** le matériau composite est un mélange de polypropylène et de fibres de verre.

3. Structure avant selon la revendication 1 ou 2, **caractérisée en ce que** les moyens de liaison de la prolonge (10) sur la poutre transversale (3) comprennent au moins un élément d'emboîtement (22) par glissement de l'extrémité avant de la prolonge (10) sur l'extrémité (3b) correspondante de la poutre transversale (3) et un organe de fixation (23) par vissage desdites extrémités entre elles.

4. Structure avant selon la revendication 3, **caractérisée en ce que** ledit au moins élément d'emboîtement par glissement comprend deux glissières (22) opposées, ménagées sur les bords inférieur et supérieur d'une platine transversale (21) ayant sensiblement la forme d'un quadrilatère et venue de matière avec le corps (11) de la prolonge (10).

5. Structure avant selon l'une quelconque des revendications 1 à 4, **caractérisée en ce que** les moyens (30) de liaison de la prolonge (10) sur le berceau (2) comprennent un doigt d'indexage (31) ménagé sur l'extrémité arrière de la prolonge (10) et destiné à coopérer avec un logement (32) de forme complémentaire ménagé sur ledit berceau (2).

6. Structure avant selon la revendication 5, **caractérisée en ce que** le doigt d'indexage (31) est recouvert d'un embout de caoutchouc.

## Claims

1. Front structure of a motor vehicle, of the type comprising in particular a subframe (2) and a transverse bumper beam (3) connected at each end (3b) to the subframe (2) by an extender (10), each extender (10) being formed by an elongate component made of a composite material and comprising at its front and rear ends means (20, 30) of connection to the transverse beam (3) and to the subframe (2), respectively, said structure being **characterized in that** the elongate component of each extender (10) comprises a main body (11) formed by a series of longitudinal ribs (12) and transverse ribs (13).

2. Front structure according to Claim 1, **characterized in that** the composite material is a mixture of polypropylene and glass fibres.

3. Front structure according to Claim 1 or 2, **characterized in that** the means for connecting the extender (10) to the transverse beam (3) comprise, on the corresponding end (3b) of the transverse beam (3), at least one socket element (22) into which the front end of the extender (10) is slid, and threaded member (23) for fixing said ends to each other.

4. Front structure according to Claim 3, **characterized in that** said sliding socket element or elements comprises two opposing tracks (22) on the bottom and top edges of an essentially quadrilateral transverse plate (21) formed integrally with the body (11) of the extender (10).

5. Front structure according to any one of Claims 1 to 4, **characterized in that** the means (30) for connecting the extender (10) to the subframe (2) comprise an indexing pin (31) formed on the rear end of extender (10) and designed to engage with a mating housing (32) formed on said subframe (2).

6. Front structure according to Claim 5, **characterized in that** the indexing pin (31) is covered by a rubber cap.

## Patentansprüche

1. Vordere Struktur eines Kraftfahrzeugs des Typs, der insbesondere ein Gestell (2) und einen Stoßfänger-Querträger (3), der an jedem seiner Enden (3b) mit dem Gestell (2) durch eine Längsstrebe (10) verbunden ist, aufweist, wobei jede Längsstrebe (10) aus einem lang gestreckten Teil gebildet ist, das aus einem Verbundmaterial hergestellt ist und an seinem vorderen und an seinem hinteren Ende Mittel (20, 30) zur Verbindung mit dem Querträger (3) bzw. dem Gestell (2) aufweist, **dadurch gekennzeichnet, dass** das lang gestreckte Teil jeder Längsstrebe (10) einen Hauptkörper (11) aufweist, der aus einer Folge von Längsrippen (12) und Querrippen (13) gebildet ist.

2. Vordere Struktur nach Anspruch 1, **dadurch gekennzeichnet, dass** das Verbundmaterial ein Gemisch aus Polypropylen und Glasfasern ist.

3. Vordere Struktur nach Anspruch 1 oder 2, **dadurch gekennzeichnet, dass** die Mittel zur Verbindung der Längsstrebe (10) mit dem Querträger (3) mindestens ein Element (22) zum Aufstecken durch Schieben des vorderen Endes der Längsstrebe (10) auf das entsprechenden Ende (3b) des Querträgers (3) und ein Organ (23) zur Befestigung durch Verschrauben der Enden miteinander aufweisen.

4. Vordere Struktur nach Anspruch 3, **dadurch gekennzeichnet, dass** zumindest das Element zum Aufstecken durch Schieben zwei gegenüberliegende Gleitschienen (22) aufweist, die am unteren und am oberen Rand einer Querplatte (21) im Wesentlichen mit der Form eines Vierecks, die mit dem Körper (11) der Längsstrebe (10) einteilig ist, ausgebildet sind.

5. Vordere Struktur nach einem der Ansprüche 1 bis 4, **dadurch gekennzeichnet, dass** die Mittel (30) zur Verbindung der Längsstrebe (10) mit dem Gestell (2) einen Arretierbolzen (31) aufweisen, der am hinteren Ende der Längsstrebe (10) ausgebildet ist und mit einem Aufnahmesitz (32) mit komplementärer Form, der am Gestell (2) ausgebildet ist, zusammenwirken soll.

6. Vordere Struktur nach Anspruch 5, **dadurch gekennzeichnet, dass** der Arretierbolzen (31) mit einer Kautschukkappe bedeckt ist.
